# EUROPEAN PATENT APPLICATION

(11) **EP 2 538 636 A1**
(43) Date of publication of application: **26.12.2012**
(21) Application number: 12171333.3
(22) Date of filing: 08.06.2012
(51) Int. Cl.: H04L 29/08

(54) **Information processing apparatus, information processing system, and program**

(30) Priority: 21.06.2011 JP 2011137437
(71) Applicant: Sony Corporation, Tokyo 108-0075 (JP)
(72) Inventor: Ohashi, Yoshinori, Tokyo 108-0075 (JP); Yamada, Eiju, Tokyo, 108-0075 (JP)
(74) Representative: Jackson, Jonathan Andrew

(57) **Abstract**

An information processing apparatus is provided. The apparatus comprises a receiver unit configured to receive, from an external device, a content identifier identifying content processed for output by the external device. The apparatus further comprises a content data acquisition unit configured to acquire, from a server device, content data corresponding to the content, based on the received content identifier. The apparatus further comprises a content generation unit configured to receive the content data from the content data acquisition unit, and generate at least a portion of the content based on the received content data.

## Description

The present disclosure contains subject matter related to that disclosed in Japanese Priority Patent Application JP 2011-137437 filed in the Japan Patent Office on June 21, 2011

The present disclosure relates to an information processing apparatus, an information processing system, and a program that preferably are capable of cooperatively accessing a network content.

In recent years, along with prevalence of network-connected apparatuses, it has become general to use various network-connected apparatuses to output (reproduce, display, etc.) contents of moving images, music, and the like on a network (hereinafter, referred to as network contents). For example, a moving image content that is reproduced in a home apparatus (network-connectable television receiver, etc.) can also be reproduced in a mobile apparatus (cellular phone, etc.).

For example, Japanese Patent Application Laid-open No. 2006-332812 discloses a display/reproduction system constituted of a content supply section and a plurality of display/reproduction sections. In the display/reproduction system, a display/reproduction content is streamed from the content supply section and reproduced by the display/reproduction section. The display/reproduction section that reproduces a content can be switched among the plurality of display/reproduction sections.

However, there has been a problem that, when a network-connected apparatus that outputs contents is switched, an acquisition of contents on a network and operation processing therefor are necessary before a new apparatus starts reproduction, with the result that the apparatus cannot be switched smoothly. Moreover, when the types of network-connected apparatuses differ (e.g., home apparatus and mobile apparatus), there has been a problem that it is difficult to handle network content data similarly among the network-connected apparatuses due to differences in resolutions of display screens, supported formats, operation processing speeds, and the like.

In view of the circumstances as described above, an information processing apparatus is provided. The apparatus comprises a receiver unit configured to receive, from an external device, a content identifier identifying content processed for output by the external device. The apparatus further comprises a content data acquisition unit configured to acquire, from a server device, content data corresponding to the content, based on the received content identifier. The apparatus further comprises a content generation unit configured to receive the content data from the content data acquisition unit, and generate at least a portion of the content based on the received content data.

Consistent with embodiments of this disclosure, an information processing apparatus is provided. The apparatus comprises a content information acquisition unit configured to transmit a content identifier identifying content, to a server device, and receive content information from the server device, the content information indicating a location at which the content is stored in the server device. The apparatus further comprises a content data acquisition unit configured to acquire, from the server device, content data corresponding to the content, based on the received content information. The apparatus further comprises a content generation unit configured to receive the content data from the content data acquisition unit, and generate at least a portion of the content based on the received content data. The apparatus further comprises a content output unit configured to output a portion of the content.

Consistent with embodiments of this disclosure, a system is provided. The system comprises a first information processing apparatus and a second information processing apparatus. The first apparatus comprises a first content generation unit configured to generate a first portion of content. The first apparatus further comprises a first content output unit configured to output the first portion of the content. The first apparatus comprises a first communication unit configured to transmit a content identifier identifying the content outputted by the first content output unit. The second apparatus comprises a second communication unit configured to receive, from the first information processing apparatus, the content identifier. The second apparatus further comprises a content data acquisition unit configured to acquire, from a server device, content data corresponding to the content, based on the received content identifier. The second apparatus further comprises a second content generation unit configured to receive the content data from the content data acquisition unit, and generate a second portion of the content based on the received content data. The second portion of the content is different from the first portion of the content.

Consistent with embodiments of this disclosure, a non-transitory computer-readable medium is provided. The medium stores instructions which, when executed by a computer, cause the computer to receive, from an external device a content identifier identifying content processed for output by the external device; acquire, from a server device, content data corresponding to the content, based on the received content identifier; receive the content data from the content data acquisition unit; and generate at least a portion of the content based on the received content data.

These and other features and advantages of the present disclosure will become more apparent in light of the following detailed description of best mode embodiments thereof, as illustrated in the accompanying drawings.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a block diagram showing a functional structure of an information processing system according to a first embodiment;
Fig. 2 is a schematic diagram showing an apparatus structure of the information processing system;
Fig. 3 is an example of content information that is acquired by a content information acquisition unit of the information processing system;
Fig. 4 is a block diagram showing a hardware structure of the information processing system;
Fig. 5 is a sequence diagram showing an operation of the information processing system;
Fig. 6 is a flowchart showing an operation of an information processing apparatus in the information processing system;
Fig. 7 is a block diagram showing a functional structure of an information processing system according to a second embodiment; and
Fig. 8 is a sequence diagram showing an operation of the information processing system.

### Detailed Description of Embodiments

Hereinafter, embodiments of the present disclosure will be described with reference to the drawings. As used herein, a 'unit' may be hardware, software, or a combination of hardware and software.

### (First embodiment)

An information processing system according a first embodiment of the present disclosure will be described.

### <Structure of information processing system>

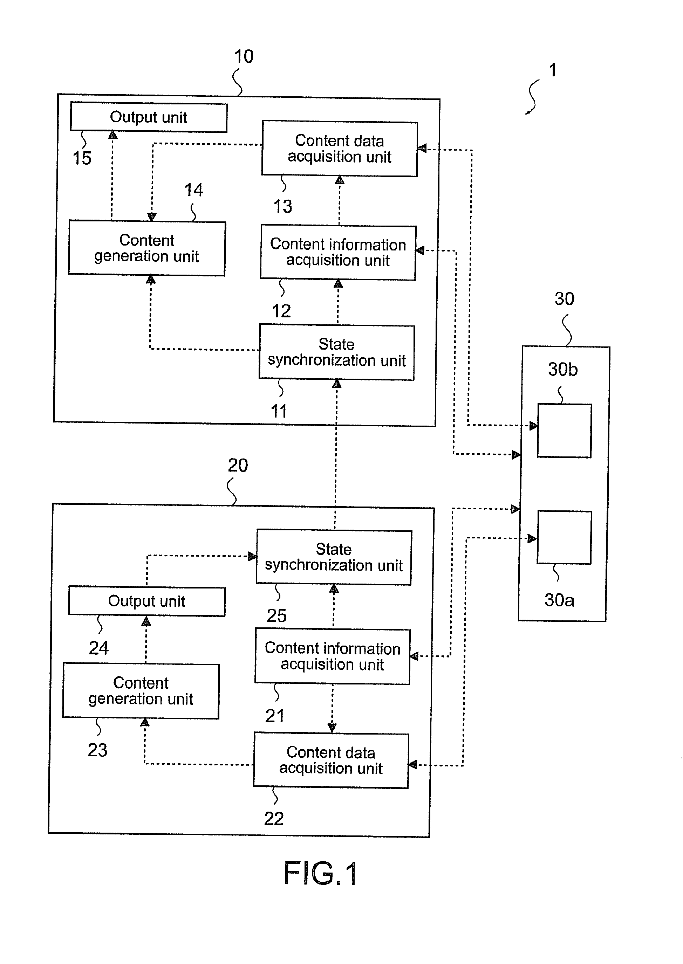

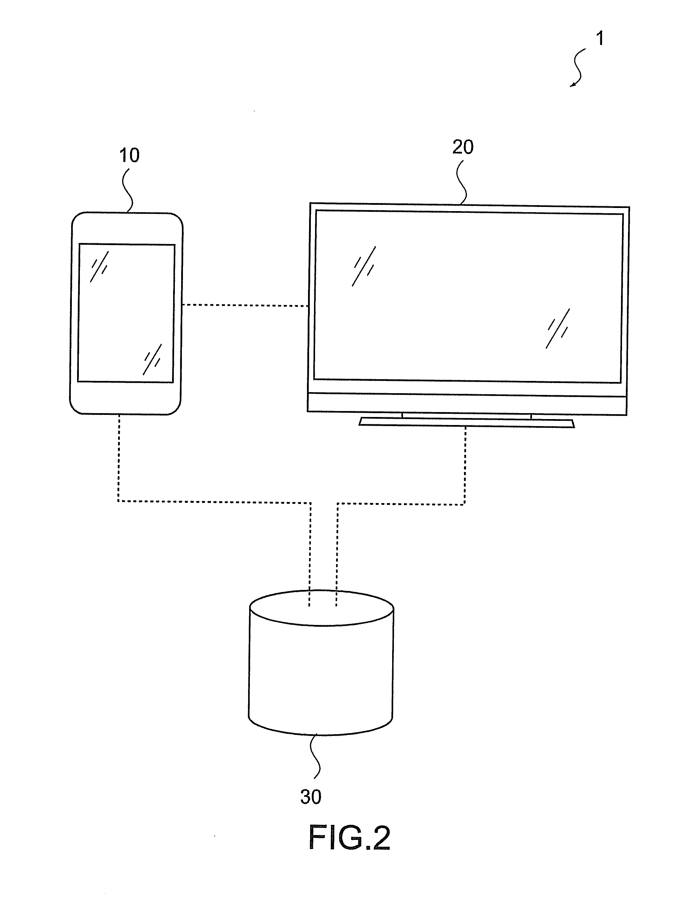

Fig. 1 is a block diagram showing a functional structure of an information processing system 1. Fig. 2 is a schematic diagram showing an apparatus structure of the information processing system 1.

As shown in Fig. 2, the information processing system 1 is constituted of an information processing apparatus 10, an information processing apparatus 20, and a server 30. The information processing apparatus 10 and the information processing apparatus 20 are not particularly limited as long as the apparatuses are each an information processing apparatus that has the functional structure to be described later, and a portable information terminal, a tablet PC (Personal Computer), a desktop PC, a television receiver having a network connection function, an audio apparatus having the network connection function, or the like can be used as the information processing apparatuses.

Hereinafter, descriptions will be given assuming that the information processing apparatus 10 is a portable information terminal (That is, e.g., a mobile apparatus) and the information processing apparatus 20 is a television receiver having the network connection function (That is, e.g., a home apparatus). The server 30 is a server that can be connected to the information processing apparatus 10 and the information processing apparatus 20 through a network and is typically a web server.

### [Functional structure of information processing system]

As shown in Fig. 1, the information processing apparatus 10 includes a state synchronization unit 11, a content information acquisition unit 12, a content data acquisition unit 13, a content generation unit 14, and an output unit 15. The state synchronization unit 11 is connected to the content information acquisition unit 12 and the content generation unit 14. The content information acquisition unit 12 is connected to the content data acquisition unit 13, and the content data acquisition unit 13 is connected to the content generation unit 14. The content generation unit 14 is connected to the output unit 15.

The state synchronization unit 11 acquires a "content identifier" and "current information" of a content processed for output (reproduced etc.) in the information processing apparatus 20. The content output in the information processing apparatus 20 is not particularly limited and may be a moving image, music, a still image, text data, an application, a website, or the like.

The content identifier is information with which the content can be specified on the network and is typically a URL (Uniform Resource Identifier). The state synchronization unit 11 is capable of acquiring the content identifier from the information processing apparatus 20 at an interval of several seconds, for example. Alternatively, when a content output by the information processing apparatus 20 is changed, the information processing apparatus 20 transmits a content identifier of a new content to the state synchronization unit 11 so that the state synchronization unit 11 acquires the content identifier.

The current information is information that represents an output state (that is, a status) of a content output by the information processing apparatus 20. Specifically, the current information is a reproduction position (reproduction time) if the content is a moving image or music and is a URL query parameter or internal state name if the content is a website.

In Fig. 1, the state synchronization unit 11 comprising a receiver unit and a transmitting unit directly acquires the content identifier and the current information from (the state synchronization unit 25 of) the information processing apparatus 20, but they may also be acquired via the server 30. The state synchronization unit 11 supplies the content identifier to the content information acquisition unit 12 and the current information to the content generation unit 14.

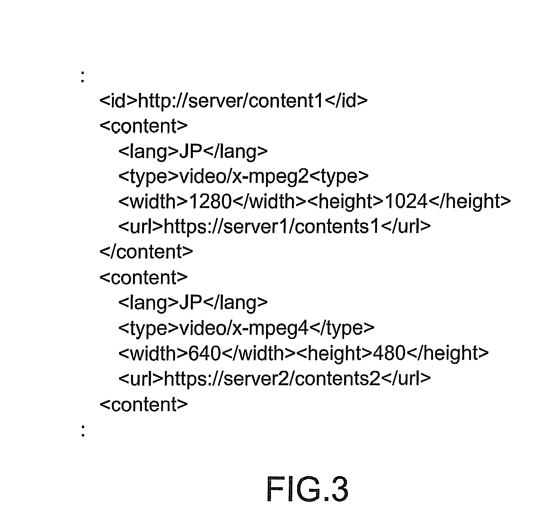

The content information acquisition unit 12 acquires "content information" corresponding to the content identifier from the server 30. The content information is information indicating how a content specified by the content identifier is stored in the server 30. Specifically, the content information may include a storage position of data of the content (hereinafter, referred to as content data) in the server 30, a resolution thereof, a supported format, and the like. Fig. 3 is an example of the content information.

In addition to content data for normal PCs (hereinafter, referred to as PC content data), content data for mobile apparatuses (hereinafter, referred to as mobile apparatus content data) of the same content may be prepared in the server. Specifically, the mobile apparatus content data is image or moving image data having a lower resolution than PC content data and data on a format generally supported by a mobile apparatus, that comply with a small-size display or relatively-low operation processing performance of the mobile apparatus.

Since such content data is data of the same content but of a different mode, the content data is specified by the same content identifier. When a plurality of pieces of content data are stored with respect to one content, the server 30 generates content information including information on each content data.

The content information acquisition unit 12 transmits a content identifier supplied from the state synchronization unit 11 (content identifier of content output in information processing apparatus 20) to the server 30 and receives content information corresponding to the content identifier from the server 30. The content information acquisition unit 12 supplies the received content information to the content data acquisition unit 13.

The content data acquisition unit 13 transmits a content data acquisition request to the server 30 based on the content information supplied from the content information acquisition unit 12. The content data acquisition unit 13 receives content data transmitted from the server 30 in response to the content data acquisition request.

The content generation unit 14 generates a content from the content data. Specifically, the content generation unit 14 generates a content that can be output immediately, such as an image, a moving image, and music from the content data (data transmitted according to communication protocol) and stores it in a memory. When the content data is data that needs to be decoded, such as a moving image, decode is executed.

Here, it is possible for the content generation unit 14 to generate a content according to current information supplied from the state synchronization unit 11. Specifically, when the content is a moving image or music, the content generation unit 14 executes decode of the content data up to a reproduction position defined in the current information. Further, some contents have a table of offsets with respect to a reproduction time as the same file or a different file depending on a format. The content generation unit 14 in this case reads a position of the offset with respect to the current information.

As described above, the content generation unit 14 is capable of generating a content that matches a state of the content that is output in the information processing apparatus 20 (reproduction position etc.) by using the current information when generating a content from content data. That is, the content generation unit 14 is capable of generating a portion of the content not processed for output by the information processing apparatus 20, based on the current information. The content generation unit 14 supplies the generated content to the output unit 15.

The output unit 15 outputs the content supplied from the content generation unit 14. Specifically, the output unit 15 supplies content signals to a display, a speaker, and the like as devices capable of outputting contents and causes those devices to output the content. Here, the output unit 15 starts outputting a content upon receiving an operation input (content output apparatus switch instruction) from a user. In other words, the output unit 15 does not output a content supplied from the content generation unit 14 while an operation input from a user is not made. It should be noted that it is also possible for the output unit 15 to output a part of a content decoded based on the current information, such as audio and subtitle of a moving image content, before an operation input is made by the user.

Here, the content supplied from the content generation unit 14 is generated based on the current information as described above. Therefore, the content output at a time point an output of the content is started is continuous with the content that has been output in the information processing apparatus 20. Specifically, the output unit 15 can start reproducing the content from a reproduction position to which the content has been reproduced in the information processing apparatus 20 when the content is a moving image or music, for example, and can display the content from a position (scroll position etc.) that has been displayed in the information processing apparatus 20 when the content is a website, for example.

The information processing apparatus 10 has the functional structure as described above. The functional structure of the information processing apparatus 10 is realized by a hardware structure to be described later.

As shown in Fig. 1, the information processing apparatus 20 includes a content information acquisition unit 21, a content data acquisition unit 22, a content generation unit 23, an output unit 24, and a state synchronization unit 25. The content information acquisition unit 21 is connected to the content data acquisition unit 22 and the state synchronization unit 25, and the content data acquisition unit 22 is connected to the content generation unit 23. The content generation unit 23 is connected to the output unit 24, and the output unit 24 is connected to the state synchronization unit 25.

The content information acquisition unit 21 acquires content information from the server 30. The content information acquisition unit 21 transmits a content identifier (URL etc.) of a content designated by a user or an application to the server 30 and receives content information corresponding to the content identifier from the server 30. The content information acquisition unit 21 supplies the received content information to the content data acquisition unit 22. The content information acquisition unit 21 also supplies the content identifier to the state synchronization unit 25. Every time a new content is designated, for example, the content information acquisition unit 21 supplies a content identifier of the content to the state synchronization unit 25.

Based on the content information supplied from the content information acquisition unit 21, the content data acquisition unit 22 transmits a content data acquisition request to the server 30. The content data acquisition unit 22 receives content data transmitted from the server 30 in response to the content data acquisition request.

The content generation unit 23 generates a content from the content data supplied from the content data acquisition unit 22. Specifically, the content generation unit 23 generates a content that can be output immediately, such as an image, a moving image, and music from the content data (data transmitted according to communication protocol). The content generation unit 23 supplies the generated content to the output unit 24.

The output unit 24 outputs the content supplied from the content generation unit 23. Specifically, the output unit 24 supplies content signals to a display, a speaker, and the like as devices capable of outputting contents and causes those devices to output the content. At the same time, the output unit 24 supplies current information (reproduction position of moving image, etc.) of a content that is being output to the state synchronization unit 25.

The state synchronization unit 25 transmits the content identifier supplied from the content information acquisition unit 21 and the current information supplied from the output unit 24 to the state synchronization unit 11 of the information processing apparatus 10. It should be noted that the state synchronization unit 11 may acquire the content identifier and the current information via the server 30, but in such a case, the state synchronization unit 25 transmits the content identifier and the current information to the server 30.

The information processing apparatus 20 has the functional structure as described above. The functional structure of the information processing apparatus 20 is realized by a hardware structure to be described later.

The server 30 transmits content information corresponding to the content identifiers transmitted from the content information acquisition unit 12 and the content information acquisition unit 21. The server 30 also searches for and transmits the content data in response to the content data acquisition requests from the content data acquisition unit 13 and the content data acquisition unit 22. The server 30 may include a server 30a that stores PC content data and a server 30b that stores mobile apparatus content data.

### [Hardware structure of information processing system]

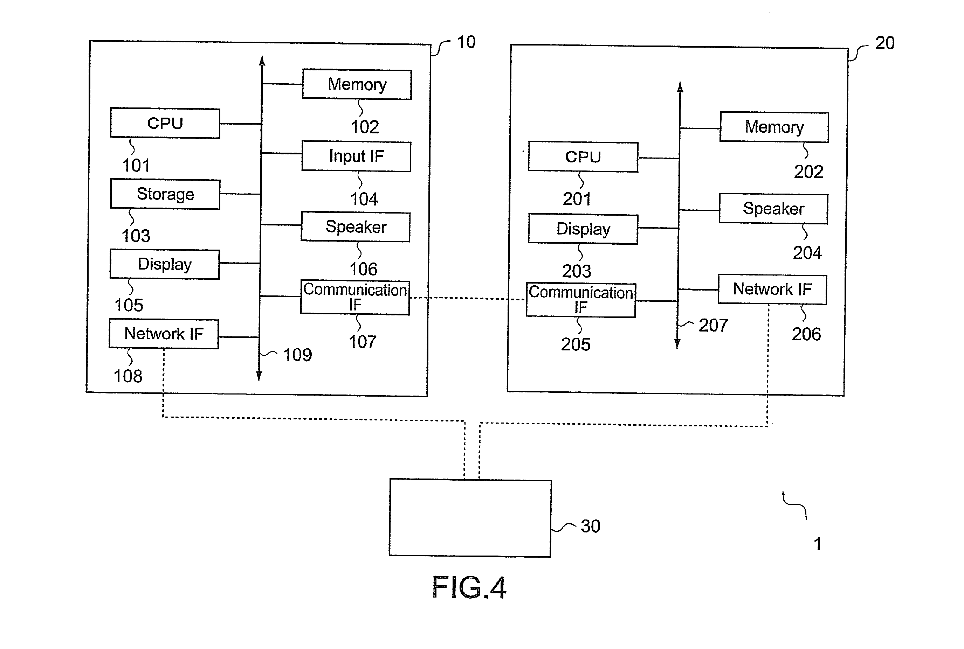

Fig. 4 is a block diagram showing a hardware structure of the information processing system 1. It should be noted that the hardware structure shown in Fig. 4 is a mere example, and other structures capable of realizing the functional structure of the information processing system 1 can be used instead.

As shown in Fig. 4, the information processing apparatus 10 includes a CPU (Central Processing Unit) 101, a memory 102, a storage 103, an input IF (Interface) 104, a display 105, a speaker 106, a communication IF 107, and a network IF 108 that are mutually connected by a bus 109.

The CPU 101 reads out programs from the memory 102 and executes operation processing. In other words, the information processing apparatus 10 functions with the CPU 101 as an operation subject. The memory 102 is a main storage apparatus such as a DRAM (Dynamic Random Access Memory).

The storage 103 is an auxiliary storage apparatus (i.e., a non-transitory, computer-readable storage medium) such as an HDD (Hard Disk Drive) and an SSD (Solid State Drive). Storage 103 may store instructions to be executed by CPU 101. An input device such as a touch panel, a keyboard, and a mouse can be used as the input IF 104. A display device such as a liquid crystal display can be used as the display 105. A general speaker can be used as the speaker 106.

The communication IF 107 is a device capable of communicating with the information processing apparatus 20 and is, for example, an infrared communication device or a near-field wireless communication device. The communication IF 107 can be used for communication between the state synchronization unit 11 and the state synchronization unit 25 in the functional structure.

The network IF 108 is a device connectable to a network and is, for example, a wired or wireless LAN (Local Area Network) port. The network IF 108 can be used for communication between the content information acquisition unit 12 and content data acquisition unit 13 and the server 30 in the functional structure.

As shown in Fig. 4, the information processing apparatus 20 includes a CPU 201, a memory 202, a display 203, a speaker 204, a communication IF 205, and a network IF 206 that are mutually connected via a bus 207.

The CPU 201 reads out programs from the memory 202 and executes operation processing. In other words, the information processing apparatus 20 functions with the CPU 201 as an operation subject. The memory 202 is a main storage apparatus such as a DRAM. A display device such as a liquid crystal display can be used as the display 203. A general speaker can be used as the speaker 204.

The communication IF 205 is a device capable of communicating with the information processing apparatus 10 and is, for example, an infrared communication device or a near-field wireless communication device. The communication IF 205 can be used for communication between the state synchronization unit 25 and the state synchronization unit 11 in the functional structure.

The network IF 206 is a device connectable to a network and is, for example, a wired or wireless LAN port. The network IF 206 can be used for communication between the content information acquisition unit 21 and content data acquisition unit 22 and the server 30 in the functional structure.

### <Operation of information processing system>

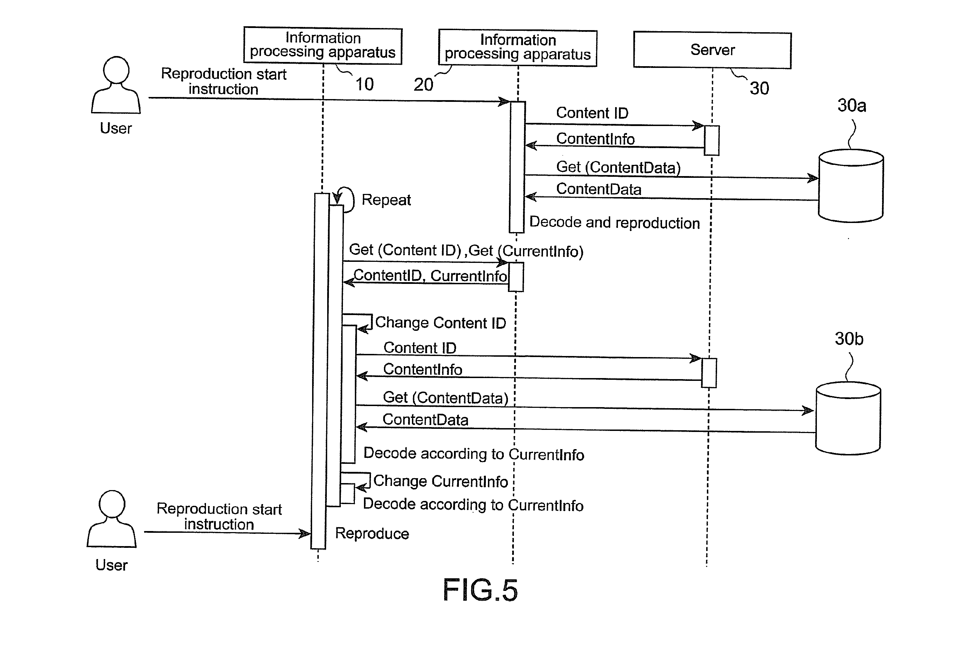

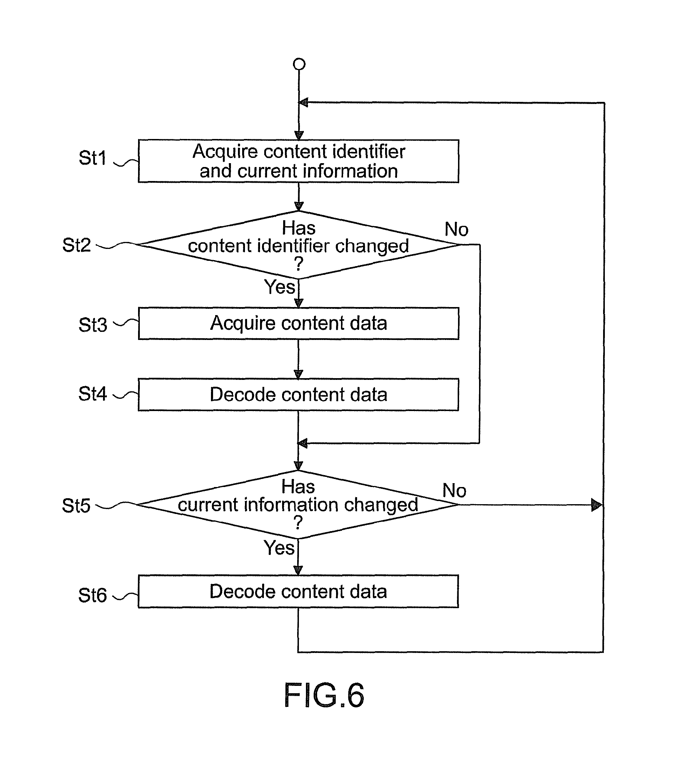

Fig. 5 is a sequence diagram showing an operation of the information processing system 1. Fig. 6 is a flowchart showing an operation of the information processing apparatus 10 in the information processing system 1. In descriptions below, an example of a command or information exchanged among the information processing apparatus 10, the information processing apparatus 20, and the server 30 will be described. Further, a moving image content is taken as an example of a content that is output from the information processing apparatus 10 and the information processing apparatus 20.

First, a user designates a content and makes an operation input to start reproduction to the information processing apparatus 20. The operation input may be made directly to the information processing apparatus 20 or may be transmitted to the information processing apparatus 20 via the information processing apparatus 10 (using remote controller).

The content information acquisition unit 21 transmits a content identifier (content ID) of the designated content to the server 30 upon receiving the operation input and acquires content information (ContentInfo) of the content. The content information acquisition unit 21 supplies the content information to the content data acquisition unit 22. The content information acquisition unit 21 also supplies the content identifier to the state synchronization unit 25.

The content data acquisition unit 22 generates a content data acquisition request (Get(ContentData)) from the content information and transmits it to the server 30, and thus acquires PC content data (ContentData) from the server 30a.

The content data acquisition unit 22 supplies the acquired content data to the content generation unit 23. Subsequently, the content generation unit 23 decodes the content data to generate a content and supplies the content to the output unit 24. The output unit 24 reproduces the content. At the same time, the output unit 24 supplies current information of the content, such as a reproduction position of a moving image content, to the state synchronization unit 25 as necessary.

The information processing apparatus 20 repeats the operation described above while the content is being reproduced. In other words, the content identifier and current information of the content that is being reproduced are stored in the state synchronization unit 25.

On the other hand, the information processing apparatus 10 carries out the following operation. The operation of the information processing apparatus 10 shown in Fig. 5 will be described with reference to Fig. 6.

The state synchronization unit 11 acquires the content identifier and current information transmitted from the state synchronization unit 25 (St1). Specifically, the state synchronization unit 11 inquires the state synchronization unit 25 about the content identifier (Get(ContentID)) and the current information (Get(CurrentInfo)). The state synchronization unit 11 supplies the content identifier to the content information acquisition unit 12 and the current information to the content generation unit 14.

The content information acquisition unit 12 compares the content identifier supplied from the state synchronization unit 11 with the previous content identifier (St2). When the content identifier differs from the previous content identifier (including case where content identifier is acquired for first time) (ST2: Yes), the content information acquisition unit 12 makes the content data acquisition unit 13 acquire the content data (St3). On the other hand, when the content identifier is the same as the previous one, the process advances to a comparison of current information (St6).

Specifically, when the content identifier differs from the previous content identifier (St2: Yes), the content information acquisition unit 12 transmits a content identifier (content ID) of a new content to the server 30 and acquires content information (Contentlnfo). The content information acquisition unit 12 supplies the acquired content information to the content data acquisition unit 13.

Upon receiving the content information, the content data acquisition unit 13 transmits a content data acquisition request (Get(ContentData)) to the server 30b and acquires mobile apparatus content data (ContentData) from the server 30b.

The content generation unit 14 decodes the content data (St4). At this time, the content generation unit 14 executes decode up to a reproduction position defined by the current information (CurrentInfo).

Subsequently, the content generation unit 14 compares the current information supplied from the state synchronization unit 11 with the previous current information (St5). When the current information differs from the previous current information (including case where current information is acquired for first time) (STS: Yes), the content generation unit 14 decodes the content data up to a reproduction position defined by the new current information (St6). After the decode, the content generation unit 14 acquires the content identifier and current information again (St1). On the other hand, when the current information is the same as the previous one (St5: No), the content identifier and current information are acquired again (St1).

Up to this point, the content generation unit 14 has executed decode up to the same reproduction position as the content that is being reproduced in the information processing apparatus 20 based on the content identifier and the current information. When the reproduction position of the content that is being reproduced in the information processing apparatus 20 is changed (e.g., fast-forward), the content generation unit 14 executes decode up to the new reproduction position based on the current information. Moreover, when the content that is being reproduced in the information processing apparatus 20 is changed, the content generation unit 14 decodes the new content up to a position defined by the current information of that content.

The content generation unit 14 supplies the content generated by the decode to the output unit 15. It should be noted that the output unit 15 is not reproducing the supplied content.

When the user makes an operation input to the information processing apparatus 10 to start reproduction, the output unit 15 starts reproducing the supplied content. As described above, since the content supplied from the content generation unit 14 has been decoded up to the same reproduction position as the content reproduced in the information processing apparatus 20, the content output by the output unit 15 is continuous with the content reproduced in the information processing apparatus 20.

Looking at the operation of the information processing system 1 described above from the user side, when an operation input to start reproduction is made to the information processing apparatus 10 while a content is being reproduced in the information processing apparatus 20, the rest of the content that has been reproduced in the information processing apparatus 20 is then reproduced in the information processing apparatus 10. In other words, the user does not need to search for the rest of the content that has been reproduced in the information processing apparatus 20 in the information processing apparatus 10, and it becomes possible to smoothly switch the apparatus to reproduce a content from the information processing apparatus 20 to the information processing apparatus 10. In addition, since decode is already ended to a position of the content that has been reproduced in the information processing apparatus 20 in the information processing apparatus 10, reproduction of the content is started immediately after the user makes an operation input, which is favorable.

Furthermore, the content data acquired by the information processing apparatus 10 is content data optimized for mobile apparatuses and thus can be speedily processed by the information processing apparatus 10. Therefore, the user can speedily view a content designated by the user at a resolution optimal for the hardware structure of the information processing apparatus 10.

### (Second embodiment)

An information processing system according to a second embodiment of the present disclosure will be described. In this embodiment, structures that are the same as those of the first embodiment are denoted by the same symbols, and descriptions thereof will be omitted.

### <Structure of information processing system>

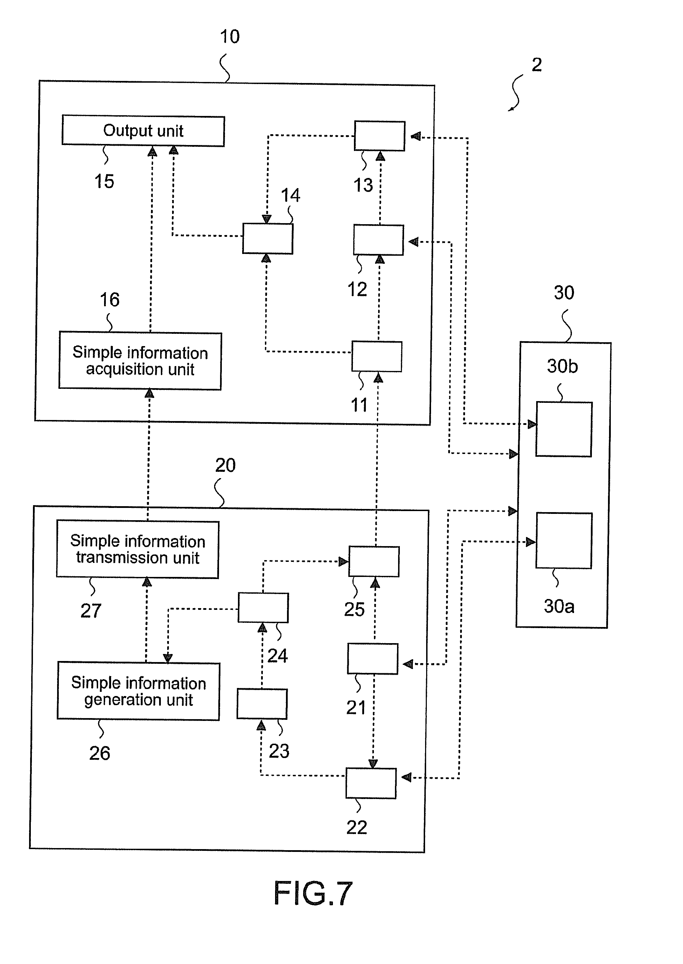

Fig. 7 is a block diagram showing a functional structure of an information processing system 2. As shown in Fig. 7, the information processing system 2 is constituted of the information processing apparatus 10, the information processing apparatus 20, and the server 30 as in the information processing system 1 of the first embodiment.

The information processing apparatus 10 of this embodiment includes, a simple information acquisition unit 16 in addition to the state synchronization unit 11, the content information acquisition unit 12, the content data acquisition unit 13, the content generation unit 14, and the output unit 15. The simple information acquisition unit 16 is connected to the output unit 15.

The simple information acquisition unit 16 acquires "simple information" from the information processing apparatus 20. The simple information is simple information on a content output in the information processing apparatus 20, such as a content title, an image of a low resolution, and a moving image of a low frame and is created in the information processing apparatus 20. The simple information acquisition unit 16 supplies the simple information acquired from the information processing apparatus 20 to the output unit 15.

The output unit 15 outputs a content supplied from the content generation unit 14 upon receiving an operation input from a user as in the first embodiment but outputs the simple information when the content generation unit 14 fails to generate a content on time. The case where the content generation unit 14 fails to generate a content on time is, for example, a case where a content is a moving image content that needs to be decoded and an operation input to start outputting a content is made to the information processing apparatus 10 right after a content output in the information processing apparatus 20 is changed.

Other structures of the information processing apparatus 10 are the same as those of the first embodiment. The functional structure of the information processing apparatus 10 as described above is realized by the hardware structure exemplified in Fig. 4.

The information processing apparatus 20 of this embodiment includes a simple information generation unit 26 and a simple information transmission unit 27 in addition to the content information acquisition unit 21, the content data acquisition unit 22, the content generation unit 23, the output unit 24, and the state synchronization unit 25. The output unit 24 is connected to the simple information generation unit 26, and the simple information generation unit 26 is connected to the simple information transmission unit 27.

The output unit 24 outputs, simultaneous with an output of a content supplied from the content generation unit 23 to a display and the like, the content to the simple information generation unit 26.

The simple information generation unit 26 generates the simple information based on the content supplied from the output unit 24. Alternatively, the simple information generation unit 26 may be connected to the content generation unit 23 so that simple information is generated based on a content generated by the content generation unit 23.

The simple information transmission unit 27 transmits the simple information generated by the simple information generation unit 26 to the simple information acquisition unit 16. The simple information transmission unit 27 transmits the simple information upon receiving a simple information acquisition request from the simple information acquisition unit 16.

Other structures of the information processing apparatus 20 are the same as those of the first embodiment. The functional structure of the information processing apparatus 20 as described above is realized by the hardware structure exemplified in Fig. 4.

The structure of the server 30 may be the same as that described in the first embodiment.

### <Operation of information processing system>

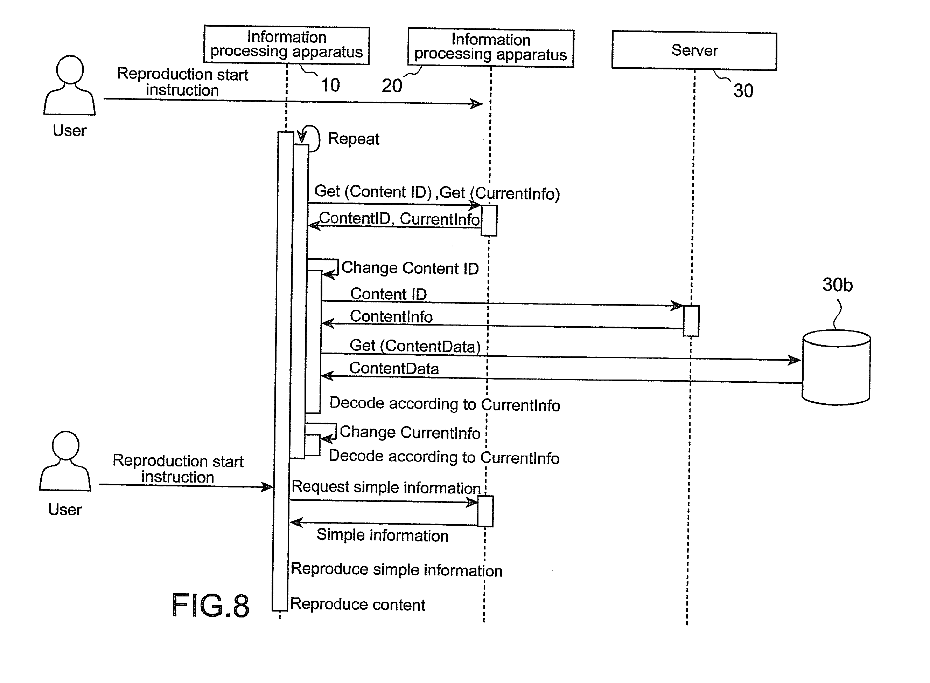

Fig. 8 is a sequence diagram showing an operation of the information processing system 2. It should be noted that the operation of the information processing system 2 in the sequence diagram is the same as that of the first embodiment (Fig. 5), so descriptions thereof will be omitted.

The operation of the information processing apparatus 10 is the same as that of the first embodiment up to a point that the content generation unit 14 decodes a content up to the same reproduction position as a content that is being reproduced in the information processing apparatus 20 based on a content identifier and current information. It should be noted that in the information processing apparatus 20, the simple information generation unit 26 that has been supplied with a content from the output unit 24 generates simple information of the content and supplies it to the simple information transmission unit 27.

When the user makes an operation input to the information processing apparatus 10, the simple information acquisition unit 16 transmits a simple information acquisition request to the simple information transmission unit 27. Upon receiving the simple information acquisition request, the simple information transmission unit 27 transmits simple information to the simple information acquisition unit 16.

The simple information acquisition unit 16 supplies the simple information to the output unit 15. The output unit 15 reproduces the simple information when not supplied with a content from the content generation unit 14, that is, content generation by the content generation unit 14 is being delayed.

Upon being supplied with a content from the content generation unit 14, the output unit 15 stops reproducing the simple information and starts reproducing the content.

As described above, in the information processing system 2 of this embodiment, even when content generation by the information processing apparatus 10 is being delayed when a content output is switched from the information processing apparatus 20 to the information processing apparatus 10, simple information is representatively output in the information processing apparatus 10. Therefore, the user can reference the simple information before a content is displayed.

The present disclosure is not limited to the above embodiments and can be variously modified without departing from the gist of the present disclosure.

The embodiments have been described assuming that the information processing apparatus 10 is a mobile apparatus and the information processing apparatus 20 is a home apparatus. However, the information processing apparatus 10 may be a home apparatus, and the information processing apparatus 20 may be a mobile apparatus. In addition, both the apparatuses may be a mobile apparatus or a home apparatus.

It should be noted that the present disclosure may also take the following structures.
(1) An information processing apparatus comprising:
   a receiver unit configured to receive, from an external device, a content identifier identifying content processed for output by the external device;
   a content data acquisition unit configured to acquire, from a server device, content data corresponding to the content, based on the received content identifier; and
   a content generation unit configured to:
      receive the content data from the content data acquisition unit; and
      generate at least a portion of the content based on the received content data.
(2) The apparatus according to (1), wherein:
   the receiver unit is configured to receive, from the external device, current information indicating a reproduction status of the content; and
   the content generation unit is configured to:
      receive the current information from the receiver unit; and
      generate the portion of the content, based on the current information.
(3) The apparatus according to (1) or (2), wherein the content generation unit is configured to generate a portion of the content not processed for output by the external device.
(4) The apparatus according to any one of (1) to (3), wherein the content generation unit is configured to generate the portion of the content before a user of the information processing apparatus requests to reproduce the portion of the content.
(5) The apparatus according to (2), wherein the current information identifies a position to which the content has been processed for output by the external device.
(6) The apparatus according to (5), further comprising a content output unit configured to output the content from the position.
(7) The apparatus according to any one of (1) to (4), further comprising a content output unit configured to output the portion of the content in a first format different from a second format of content processed for output by the external device.
(8) The apparatus according to (7), wherein the first format has a resolution lower than the second format.
(9) The apparatus according to (5) or (6), wherein the content comprises one of a moving image, music, or a web page.
(10) The apparatus according to (2) or (5), further comprising a transmission unit configured to transmit a request for the content identifier and the current information to the external device.
(11) The apparatus according to (2), (5) or (10), wherein the receiver unit is configured to receive the content identifier and the current information at predetermined time intervals.
(12) The apparatus according to any one of (1) to (4), or (7), further comprising:
   a sample information acquisition unit configured to receive a sample of the content from the external device; and
   a content output unit configured to output:
      the portion of the content; and
      the sample of the content when the content generation unit fails to generate the portion of the content on time.
(13) An information processing apparatus comprising:
   a content information acquisition unit configured to:
      transmit a content identifier identifying content, to a server device; and
      receive content information from the server device, the content information indicating a location at which the content is stored in the server device;
      a content data acquisition unit configured to acquire, from the server device, content data corresponding to the content, based on the received content information;
      a content generation unit configured to:
         receive the content data from the content data acquisition unit; and
         generate at least a portion of the content based on the received content data; and
         a content output unit configured to output a portion of the content.
(14) The apparatus according to (13), wherein the content output unit is configured to generate current information indicating a position to which the content has been processed for output by the content output unit.
(15) The apparatus according to (14), further comprising a communication unit configured to:
   receive the current information from the content output unit; and
   transmit the current information to an external device.
(16) The apparatus according to (15), wherein the communication unit is configured to transmit the current information to the external device at a predetermined time interval, upon a request from the external device, or when the content output unit is configured to output a different content.
(17) The apparatus according to (13) or (14), further comprising:
   a sample information generation unit configured to generate a sample of the content and supply the sample of the content to the external device.
(18) The apparatus according to (17), wherein the sample information generation unit is configured to supply the sample of the content to the external device when the external device fails to output the content on time.
(19) A system comprising:
   a first information processing apparatus comprising:
      a first content generation unit configured to generate a first portion of content;
      a first content output unit configured to output the first portion of the content; and
      a first communication unit configured to transmit a content identifier identifying the content outputted by the first content output unit; and
      a second information processing apparatus comprising:
         a second communication unit configured to receive, from the first information processing apparatus,
         the content identifier;
         a content data acquisition unit configured to acquire, from a server device, content data corresponding to the content, based on the received content identifier; and
         a second content generation unit configured to:
            receive the content data from the content data acquisition unit; and
            generate a second portion of the content based on the received content data, the second portion of the content being different from the first portion of the content.
(20) A non-transitory computer-readable medium storing instructions which, when executed by a computer, cause the computer to:
   receive, from an external device a content identifier identifying content processed for output by the external device;
   acquire, from a server device, content data corresponding to the content, based on the received content identifier;
   receive the content data from the content data acquisition unit; and
   generate at least a portion of the content based on the received content data.

In addition, it should be noted that the present disclosure may also take the following structures.
(1) An information processing apparatus, including:
   a state synchronization unit configured to acquire a content identifier of a content output in another information processing apparatus;
   a content information acquisition unit configured to acquire content information corresponding to the content identifier from a server;
   a content data acquisition unit configured to acquire content data specified by the content identifier based on the content information from the server;
   a content generation unit configured to generate a content from the content data; and
   an output unit configured to start outputting the content supplied from the content generation unit upon receiving an operation input from a user.
(2) The information processing apparatus according to (1) above,
   in which the state synchronization unit acquires current information representing an output state of the content in the another information processing apparatus in addition to the content identifier, and
   in which the content generation unit generates a content based on the current information.
(3) The information processing apparatus according to (1) or (2) above,
   in which the content is a moving image content, and
   in which the content generation unit decodes the content data up to a reproduction position defined by the current information.
(4) The information processing apparatus according to any one of (1) to (3) above,
   in which the state synchronization unit inquires the another information processing apparatus about the content identifier and the current information and acquires the content identifier and the current information from the another information processing apparatus.
(5) The information processing apparatus according to any one of (1) to (4) above,
   in which the information processing apparatus is a mobile apparatus, and
   in which the content data is content data optimized for the mobile apparatus.
(6) The information processing apparatus according to any one of (1) to (5) above, further including
   a simple information acquisition unit configured to acquire, from the another information processing apparatus, simple information on the content output in the another information processing apparatus.
(7) An information processing system, including:
   a first information processing apparatus including
      a first state synchronization unit that acquires a content identifier of a content output in a second information processing apparatus,
      a first content information acquisition unit that acquires first content information corresponding to the content identifier from a server,
      a first content data acquisition unit that acquires first content data specified by the content identifier based on the first content information from the server,
      a first content generation unit that generates a content from the first content data, and a first output unit that starts outputting the content supplied from the first content generation unit upon receiving an operation input from a user; and
   a second information processing apparatus including
      a second content information acquisition unit that acquires second content information corresponding to a content identifier of a content specified by a user from the server,
      a second content data acquisition unit that acquires second content data specified by the content identifier based on the second content information from the server,
      a second content generation unit that generates a content from the second content data, and
      a second output unit that outputs the content supplied from the second content generation unit.
(8) A program that causes a computer to function as:
   a state synchronization unit configured to acquire a content identifier of a content output in another information processing apparatus;
   a content information acquisition unit configured to acquire content information corresponding to the content identifier from a server;
   a content data acquisition unit configured to acquire content data specified by the content identifier based on the content information from the server;
   a content generation unit configured to generate a content from the content data; and
   an output unit configured to start outputting the content supplied from the content generation unit upon receiving an operation input from a user.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus comprising:
a receiver unit configured to receive, from an external device, a content identifier identifying content processed for output by the external device;
a content data acquisition unit configured to acquire, from a server device, content data corresponding to the content, based on the received content identifier; and
a content generation unit configured to:
receive the content data from the content data acquisition unit; and
generate at least a portion of the content based on the received content data.

2. The apparatus according to claim 1, wherein:
the receiver unit is configured to receive, from the external device, current information indicating a reproduction status of the content; and
the content generation unit is configured to:
receive the current information from the receiver unit; and
generate the portion of the content, based on the current information.

3. The apparatus according to claim 1, wherein the content generation unit is configured to generate a portion of the content not processed for output by the external device.

4. The apparatus according to claim 1, wherein the content generation unit is configured to generate the portion of the content before a user of the information processing apparatus requests to reproduce the portion of the content.

5. The apparatus according to claim 2, wherein the current information identifies a position to which the content has been processed for output by the external device.

6. The apparatus according to claim 5, further comprising a content output unit configured to output the content from the position.

7. The apparatus according to claim 1, further comprising a content output unit configured to output the portion of the content in a first format different from a second format of content processed for output by the external device.

8. The apparatus according to claim 7, wherein the first format has a resolution lower than the second format.

9. The apparatus according to claim 2, further comprising a transmission unit configured to transmit a request for the content identifier and the current information to the external device.

10. The apparatus according to claim 2, wherein the receiver unit is configured to receive the content identifier and the current information at predetermined time intervals.

11. The apparatus according to claim 1, further comprising:
a sample information acquisition unit configured to receive a sample of the content from the external device; and
a content output unit configured to output:
the portion of the content; and
the sample of the content when the content generation unit fails to generate the portion of the content on time.

12. An information processing apparatus comprising:
a content information acquisition unit configured to:
transmit a content identifier identifying content, to a server device; and
receive content information from the server device, the content information indicating a location at which the content is stored in the server device;
a content data acquisition unit configured to acquire, from the server device, content data corresponding to the content, based on the received content information;
a content generation unit configured to:
receive the content data from the content data acquisition unit; and
generate at least a portion of the content based on the received content data; and
a content output unit configured to output a portion of the content.

13. The apparatus according to claim 13, wherein the content output unit is configured to generate current information indicating a position to which the content has been processed for output by the content output unit.

14. The apparatus according to claim 14, further comprising a communication unit configured to:
receive the current information from the content output unit; and
transmit the current information to an external device.

15. A system comprising:
a first information processing apparatus comprising:
a first content generation unit configured to generate a first portion of content;
a first content output unit configured to output the first portion of the content; and
a first communication unit configured to transmit a content identifier identifying the content outputted by the first content output unit; and
a second information processing apparatus comprising:
a second communication unit configured to receive, from the first information processing apparatus,
the content identifier;
a content data acquisition unit configured to acquire, from a server device, content data corresponding to the content, based on the received content identifier; and
a second content generation unit configured to:
receive the content data from the content data acquisition unit; and
generate a second portion of the content based on the received content data, the second portion of the content being different from the first portion of the content.
